# EUROPÄISCHE PATENTSCHRIFT

(11) **EP 0 909 795 B1**
(45) Veröffentlichungstag und Bekanntmachung des Hinweises auf die Patenterteilung: **16.08.2001**
(21) Anmeldenummer: 98118849.3
(22) Anmeldetag: 06.10.1998
(51) Int. Cl.: C09B 67/12, C09B 67/16, C09B 67/22

(54) **Verfahren zur Überführung von halogenierten Kupferphthalocyanin-Rohpigmenten in eine für die Anwendung geeignete Pigmentform**
Process to transfer crude halogenated copper-phthalocyanine pigments into a pigment form suitable for use
Procédé pour transférer des pigments crus du type cuprophthalocyanine halogené dans une forme pigmentaire propre pour son usage

(30) Priorität: 17.10.1997 DE 19745922
(43) Veröffentlichungstag der Anmeldung: 21.04.1999
(73) Patentinhaber: BASF AKTIENGESELLSCHAFT, 67056 Ludwigshafen (DE)
(72) Erfinder: Schütze, Dr. Andrea Birgit, 20249 Hamburg (DE); Scherhag, Dr. Frank, 70469 Stuttgart-Feuerbach (DE); Böttcher, Dr. Peter, 67316 Carlsberg (DE)

(56) Entgegenhaltungen:
- EP-A- 0 058 888
- EP-A- 0 182 207
- EP-A- 0 761 770
- DE-A- 2 516 054
- DE-A- 2 519 753
- DE-A- 2 753 008
- DE-B- 1 242 180
- GB-A- 1 088 736
- DATABASE WPI Week 9521 Derwent Publications Ltd., London, GB; AN 95-057391[21] XP002089066 "Poly-(halo-copper phthalocyanine) pigment preparation" & JP 06 336556 A (TOYO INK MFG. CO.) , 6. Dezember 1994

## Beschreibung

Die vorliegende Erfindung betrifft ein neues Verfahren zur Überführung von halogenierten Kupferphthalocyanin-Rohpigmenten mit einem Chlorgehalt von 4 bis 50,3 Gew.-% in eine für die Anwendung geeignete Pigmentform.

Bei der Halogenierung von Kupferphthalocyanin werden üblicherweise amorphe bis mikrokristalline Produkte erhalten, die aufgrund ihrer hohen Neigung zur Agglomeration für die Anwendung als Pigment ungeeignet sind.

Es sind verschiedene prinzipielle Methoden bekannt, um die Rohpigmente in eine geeignete Pigmentform zu überführen, z.B. mechanische Teilchenverkleinerung oder Behandlung mit konzentrierter Schwefelsäure oder mit organischen Lösungsmitteln in der Wärme.

Für die Lösungsmittelbehandlung von polyhalogenierten Kupferphthalocyaninen werden hauptsächlich Xylol (DE-A-20 13 818), Trichlorbenzol, Chlornaphthalin oder Nitrobenzol (DE-A-24 49 231), 2-Nitrophenol (DE-A-12 42 180), Naphthol (GB-A-1 088 736), Benzoesäure und/oder Alkylbenzoesäuren (EP-A-58 888) oder aliphatische Ketone (DE-A 36 36 428) in Gegenwart oder in Abwesenheit von Wasser verwendet. In der JP-A 336 556/1994 wird ein Verfahren beschrieben, bei dem polyhalogenierte Kupferphthalocyanine in Gegenwart von Kupferphthalocyaninderivaten in Gemischen aus Wasser und aromatischen Lösungsmitteln erhitzt werden, acide Lösungsmittel werden hierbei jedoch nicht eingesetzt.

Diese bekannten Verfahren liefern oft nur unbefriedigende Ergebnisse und sind zudem nur auf Kupferphthalocyanine mit hohem Halogenierungsgrad (Chlorgehalt ≥ 38,5 Gew.-%, d.h., mindestens 10 Chloratome am CuPc-Gerüst) beschränkt.

Der Erfindung lag daher die Aufgabe zugrunde, ein Verfahren bereitzustellen, mit dem nicht nur polyhalogenierte, sondern vor allem auch anhalogenierte (d.h. z.B. einen Chlorgehalt von < 38,5 Gew.-% aufweisende) Kupferphthalocyanin-Rohpigmente auf verfahrenstechnisch einfache, wirtschaftliche Weise in koloristisch hochwertige Pigmentformen überführt werden können und das die Herstellung für den jeweiligen Anwendungszweck optimal angepaßter Pigmente ermöglicht.

Demgemäß wurde ein Verfahren zur Überführung von halogenierten Kupferphthalocyanin-Rohpigmenten mit einem Chlorgehalt von 4 bis 50,3 Gew.-% in eine für die Anwendung geeignete Pigmentform gefunden, welches dadurch gekennzeichnet ist, daß man das Rohpigment in der Wärme in Gegenwart eines Kupferphthalocyaninderivats aus der Gruppe der Kupferphthalocyaninsulfonsäuren und -carbonsäuren und deren Alkalimetall-, Ammonium- und Alkylammoniumsalzen, der aminosubstituierten und aminomethylierten Kupferphthalocyanine und deren Umsetzungsprodukten mit Alkylierungsmitteln, Sulfonsäuren, Sulfonsäurechloriden und Carbonsäurechloriden, der imidomethylen- und amidomethylensubstituierten Kupferphthalocyanine, der alkyl-, aryl- und cyanosubstituierten Kupferphthalocyanine und der hydroxy- und alkoxysubstituierten Kupferphthalocyanine, gewünschtenfalls in Anwesenheit von Wasser, mit einer bei Arbeitstemperatur in flüssiger Form vorliegenden, aciden aromatischen organischen Verbindung der allgemeinen Formel I 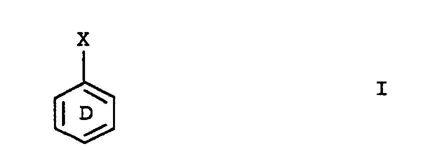 in welcher X Hydroxy oder Carboxy bedeutet und der Benzolring D zusätzlich bis zu zwei gleiche oder verschiedene Substituenten aus der Gruppe Nitro, C₁-C₄-(bevorzugt C₁-C₂-)Alkyl, C₂-C₄-(bevorzugt C₂-C₃-)Alkenyl, Chlor und Brom tragen kann und benzoanneliert sein kann, behandelt.

Wenn X Carboxy bedeutet ("Lösungsmittel" auf der Basis von Benzoesäure), ist der Benzolring D bevorzugt durch eine zusätzliche C₁-C₄-, insbesondere C₁-C₂-Alkylgruppe substituiert oder besonders bevorzugt unsubstituiert.

Wenn X für Hydroxy steht (phenolische "Lösungsmittel"), trägt der Benzolring D vorzugsweise zusätzlich einen der genannten Substituenten; ist der Benzolring D benzanneliert, dann trägt er bevorzugt keinen weiteren Substituenten.

Die Verbindung I sollte bei Raumtemperatur nicht bis wenig in Wasser löslich sein und bei Arbeitstemperatur in flüssiger Form vorliegen. Der Schmelzpunkt der Verbindungen I sollte daher in der Regel ≤ 200°C, bevorzugt ≤ 150°C, sein.

Als acide aromatische organische Verbindung I sind z.B. geeignet: Benzoesäure, 2-, 3- und 4-Methylbenzoesäure, 2-, 3- und 4-Ethylbenzoesäure, Phenol, 2-, 3- und 4-Nitrophenol, 2-, 3- und 4-Methylphenol (-Kresol), 2-, 3- und 4-Ethylphenol, 2-Allylphenol, 2-, 3- und 4-Bromphenol, 2,4-Dibromphenol, 2,4-Dichlorphenol, 2-Chlor-6-nitrophenol, 2-Chlor-4-nitrophenol, 2,4-Dinitrophenol, 3-Methyl-4-nitrophenol, 1- und 2-Naphthol und 1-Brom-2-naphthol und deren Mischungen, wobei 3- und 4-Nitrophenol und 1- und 2-Naphthol bevorzugt sind und 2-Nitrophenol besonders bevorzugt ist.

In der Regel werden 1 bis 20 g, vorzugsweise 1 bis 6 g Verbindung I je g Kupferphthalocyanin-Rohpigment eingesetzt.

Man kann die erfindungsgemäße Pigmentbehandlung sowohl in Abals auch in Anwesenheit von Wasser vornehmen. D.h., man kann das halogenierte Kupferphthalocyanin-Rohpigment in getrockneter Form oder vorteilhaft auch direkt in Form des bei der Halogenierung erhaltenen, wasserfeuchten (üblicherweise 50 bis 90 Gew.-% Wasser enthaltenden) Filterpreßkuchens einsetzen.

Die Menge an Wasser ist bei der erfindungsgemäßen Pigmentbehandlung nicht kritisch, jedoch sollten zu große Wassermengen vermieden werden, um die Raum/Zeit-Ausbeuten nicht unnötig zu senken.

Die erfindungsgemäße Pigmentbehandlung wird in Gegenwart eines der eingangs genannten Kupferphthalocyaninderivate durchgeführt, wobei selbstverständlich auch Mischungen dieser Derivate eingesetzt werden können.

Die Kupferphthalocyaninderivate dienen sowohl zur Steuerung des Kristallwachstums bei der Rekristallisation als auch zur Oberflächenmodifizierung des resultierenden Pigments. Ihre Auswahl richtet sich nach dem Chlorierungsgrad des Rohpigments, dem gewünschten Eigenschaftsprofil des rekristallisierten Pigments und dem späteren Anwendungsmedium.

Bevorzugt sind Kupferphthalocyaninderivate der allgemeinen Formel II 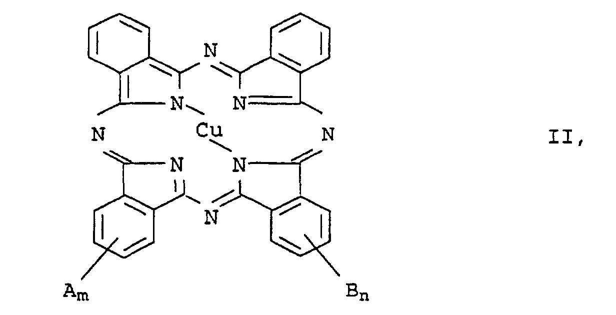 in welcher die Variablen folgende Bedeutung haben:
- A und B: unabhängig voneinander folgende Substituenten: -SO₃M, -CO₂M, -SO₃H·HNR¹R², -CH₂NR³R⁴, -NR³R⁴,
-CH₂NR³R⁴·HO₃SR⁵, -NR³R⁴·HO₃SR⁵, -NHCOR¹, -CH₂NHCOR¹,
-NHSO₂R¹, -CH₂NHSO₂R¹, -SO₂NHR¹, -CONHR¹, C₁-C₆-Alkyl, Aryl, Cyano oder -OR⁶, wobei
R¹ und R² unabhängig voneinander Wasserstoff oder C₂-C₂₀-Alkenyl oder C₁-C₂₀-Alkyl bedeuten, das durch -NR⁷R⁸ substituiert sein kann, wobei R⁷ und R⁸ unabhängig voneinander für C₁-C₂₀-Alkyl, C₅-C₈-Cycloalkyl, das ein oder mehrere Heteroatome enthalten kann, oder Wasserstoff stehen,
R³ und R⁴ unabhängig voneinander Wasserstoff, C₁-C₂₀-Alkyl, C₂ - C₂₀ -Alkenyl oder Aryl bedeuten oder unter Ausbildung eines das Stickstoffatom sowie gegebenenfalls weitere Heteroatome oder Carbonyl- oder Sulfonylgruppen enthaltenden, 5- oder 6-gliedrigen Rings, der benzanelliert sein kann, miteinander verbunden sind,
R⁵ für p-(C₁₀-C₂₀-Alkyl)phenyl oder C₂-C₂₀-Alkenyl steht;
R⁶ Wasserstoff oder C₁-C₆-Alkyl bedeutet und
M für Wasserstoff oder ein Alkalimetall steht;
- m: eine ganze oder gebrochene Zahl > 0 bis 4,0;
- n: eine ganze oder gebrochene Zahl von 0 bis 4,0.

Besonders bevorzugt sind Kupferphthalocyaninderivate der Formel II, in welcher die Variablen diese Bedeutung haben:
- A und B: unabhängig voneinander folgende Substituenten: -SO₃M, -SO₃H·HNR¹R², -CH₂NR³R^{4,} -CH₂NR³R⁴·HO₃SR⁵ oder -SO₂NHR¹, wobei
R¹ und R² unabhängig voneinander für C₁-C₂₀-Alkyl oder Wasserstoff stehen,
R³ und R⁴ unabhängig voneinander C₁-C₆-Alkyl oder Wasserstoff bedeuten oder unter Ausbildung eines das Stickstoffatom sowie Carbonyl- oder Sulfonylgruppen enthaltenden benzannelierten, 5-gliedrigen Rings miteinander verbunden sind;
R⁵ für p-(C₁₀-C₂₀-Alkyl)phenyl steht;
- m: eine ganze oder gebrochene Zahl > 0 bis 4;
- n: eine ganze oder gebrochene Zahl von 0 bis 4, wobei die Summe m + n einen Wert von 0,1 bis 4, insbesondere 1,0 bis 3,5, annimmt.

Als Beispiele für die in Formel II enthaltenen Reste A und B bzw. für deren Substituenten seien im einzelnen genannt:
geradkettige oder verzweigte C₁-C₂₀-Alkylreste wie Methyl, Ethyl, Propyl, Isopropyl, Butyl, Isobutyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436);
geradkettige oder verzweigte C₂-C₂₀-Alkenylreste wie Ethenyl, Propenyl, Isopropenyl, Butenyl, Isobutenol, Pentenyl, Hexenyl, Heptenyl, Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl und Eicosenyl;
geradkettige oder verzweigte C₁-C₆-Alkoxyreste wie Methoxy, Ethoxy, Propoxy, Isopropoxy, Butoxy, Isobutoxy, tert.-Butoxy, Pentoxy, Isopentoxy, Neopentoxy, tert.-Pentoxy und Hexoxy;
C₅-C₈-Cycloalkylreste, die Heteroatome wie Sauerstoff und/oder Stickstoff als Ersatz für ein oder mehrere Kohlenstoffatome enthalten können, aber nicht über diese gebunden sind, wie Cyclopentyl, Cyclohexyl, Cycloheptyl, Cyclooctyl, Tetrahydrofuryl, Pyrrolidyl, Piperidyl, Piperazyl und Morpholinyl;
Arylreste wie Naphthyl und insbesondere Phenyl;
p-(C₁₀-C₂₀-Alkyl)phenylreste wie p-Decyl-, p-Undecyl-, vor allem p-Dodecyl-, auch p-Tridecyl-, p-Tetradecyl-, p-Pentadecyl-, p-Hexadecyl-, p-Heptadecyl-, p-Octadecyl-, p-Nonadecyl- und p-Eicosylphenyl;
Carboxy, bevorzugt Sulfo und Mono-(C₁₀-C₂₀-alkyl)ammoniumsulfonatreste wie Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylammoniumsulfonatreste;
Mono- und Di-(C₁-C₆-alkyl)aminoreste wie Mono- und Dimethylamino, Mono- und vor allem Diethylamino, Mono- und Dipropylamino, Monound Diisopropylamino, Mono- und Dibutylamino, Mono- und Diisobutylamino, Mono- und Dipentylamino und Mono- und Dihexylamino sowie vor allem Mono- und bevorzugt Di-(C₁-C₆-alkyl)aminomethylreste, in denen die genannten Aminoreste über eine Methylengruppe an das Phthalocyaningerüst gebunden sind;
Umsetzungsprodukte der Mono- und Di-(C₁-C₆-alkyl)aminoreste und bevorzugt der entsprechenden Aminomethylreste mit C₁₀-C₂₀-Alkylphenylsulfonsäuren wie p-Decyl-, p-Undecyl-, vor allem p-Dodecyl-, auch p-Tridecyl-, p-Tetradecyl-, p-Pentadecyl-, p-Hexadecyl-, p-Heptadecyl-, p-Octadecyl-, p-Nonadecyl- und p-Eicosylphenylsulfonsäuren, wobei die Alkylreste in o-, m- oder vorzugsweise p-Stellung zur Sulfonsäuregruppierung stehen, z.B. -CH₂-N(C₂H₅)₂·HO₃S-Ph-4-C₁₂H₂₅ und -CH₂-NH(C₂H₅)·HO₃S-Ph-4-C₁₂H₂₅;
das Aminstickstoffatom enthaltende und darüber gebundene Heterocycloalkyl- und Heteroarylreste wie 4-Morpholinyl, Pyrrolidyl, Piperidyl, Piperazyl, Pyrazolyl, Pyrryl, Pyrazyl, Imidazyl, vor allem N-Phthalimidyl und N-Saccharinyl sowie bevorzugt die entsprechenden, über -CH₂- an das Phthalocyaningerüst gebundenen Reste;
Mono- (C₁-C₂₀-alkylcarbonyl)aminoreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylcarbonylamino sowie die entsprechenden über -CH₂- an das Phthalocyaningerüst gebundenen Aminoreste;
Mono-(C₁-C₂₀-alkylsulfonyl)aminoreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylsulfonylamino sowie die entsprechenden über -CH₂- an das Phthalocyaningerüst gebundenen Aminoreste;
Mono-(C₁-C₂₀-alkylamino)sulfonylreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylaminosulfonyl, wobei die Alkylreste eine endständige Amino-, Mono- oder Di(C₁-C₆-alkyl)aminogruppe tragen können;
Mono-(C₁-C₂₀-alkylamino)carbonylreste wie Monomethyl-, Monoethyl-, Monopropyl-, Monoisopropyl-, Monobutyl-, Monoisobutyl-, tert.-Monobutyl-, Monopentyl-, Monoisopentyl-, Mononeopentyl-, tert.-Monopentyl-, Monohexyl-, 2-Monomethylpentyl-, Monoheptyl-, 1-Monoethylpentyl-, Monooctyl-, 2-Monoethylhexyl-, Monoisooctyl-, Monononyl-, Monoisononyl-, Monodecyl-, Monoundecyl-, Monododecyl-, Monotridecyl-, Monotetradecyl-, Monopentadecyl-, vor allem Monohexadecyl-, auch Monoheptadecyl-, Monooctadecyl-, Monononadecyl- und Monoeicosylaminocarbonyl, wobei die Alkylreste eine endständige Amino-, Mono- oder Di(C₁-C₆-alkyl)aminogruppe tragen können.

Die Phthalocyaninderivate II sind an sich bekannt bzw. nach bekannten Methoden herzustellen (z.B. EP-A-535 774, DE-A-25 16 054, EP-A-538 784 und DE-A-29 05 114).

In der Regel setzt man beim erfindungsgemäßen Verfahren 0,1 bis 20 Gew.-%, bevorzugt 1 bis 10 Gew.-%, Kupferphthalocyaninderivat II, jeweils bezogen auf das Kupferphthalocyanin-Rohpigment, ein.

Geeignete Arbeitstemperaturen betragen im allgemeinen 80 bis 200°C, vorzugsweise 80 bis 120°C, wobei die Temperatur im Einzelfall auch auf den Schmelzpunkt der aciden aromatischen organischen Verbindung I abzustimmen ist.

Bei Anwesenheit von Wasser wird die erfindungsgemäße Pigmentbehandlung vorzugsweise bei Temperaturen > 100°C unter Eigendruck im geschlossenen Reaktor vorgenommen.

Üblicherweise nimmt die Pigmentbehandlung 2 bis 10 h, insbesondere 2 bis 5 h, in Anspruch. Je höher die gewählte Temperatur ist, um so schneller erfolgt die Rekristallisation.

Verfahrenstechnisch geht man beim erfindungsgemäßen Verfahren zweckmäßigerweise wie folgt vor:

Eine Mischung von halogeniertem Kupferphthalocyanin-Rohpigment, das vorzugsweise als wasserfeuchter Filterkuchen vorliegt, Kupferphthalocyaninderivat und acide aromatische organische Verbindung I wird auf die gewünschte Temperatur erhitzt und 2 bis 10 h bei dieser Temperatur gerührt. Zur Isolierung des Pigments wird dann bei 50 bis 100°C wäßrige Base (z.B. 2 bis 60 gew.-%ige Alkalimetallauge) in mindestens der Menge zugegeben, die zur Überführung der Verbindung I in ihr wasserlösliches Alkalimetallsalz stöchiometrisch erforderlich ist. Das Pigment wird anschließend abfiltriert, mit Wasser gewaschen und getrocknet.

Die acide aromatische organische Verbindung I kann durch Ansäuern der Alkalimetallsalzlösung mit Mineralsäure und Abkühlen auf Raumtemperatur wieder ausgefällt und erneut für eine Pigmentbehandlung eingesetzt werden.

Mit Hilfe des erfindungsgemäßen Verfahrens können brillante, transparente und farbstarke halogenierte (sowohl anhalogenierte als auch polyhalogenierte) Kupferphthalocyaninpigmente mit hervorragenden rheologischen Eigenschaften, die sowohl für den Einsatz in konventionellen als auch in Wasserbasis-Lacksystemen geeignet sind, vorteilhaft erhalten werden.

### Beispiele

Ein Gemisch aus 50 g (ber. 100 %) eines halogenierten Kupferphthalocyanin-Rohpigments mit einem Chlorgehalt von x₁ Gew.-% (eingesetzt in Form eines wäßrigen Preßkuchens mit einem Wassergehalt von x₂ Gew.-%), 2,5 g des Kupferphthalocyaninderivats II' 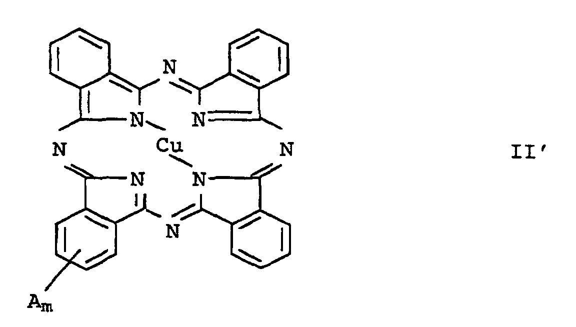 und 100 g der aciden aromatischen organischen Verbindung I wurde auf 100°C erhitzt und 5 h bei dieser Temperatur gerührt.

Nach Abkühlen auf 80°C wurden 290 g 31 gew.-%ige Natronlauge zugegeben. Das Pigment wurde abfiltriert, mit Wasser gewaschen und bei 100°C getrocknet.

Weitere Einzelheiten zu diesen Versuchen sowie deren Ergebnisse sind in der folgenden Tabelle zusammengestellt:

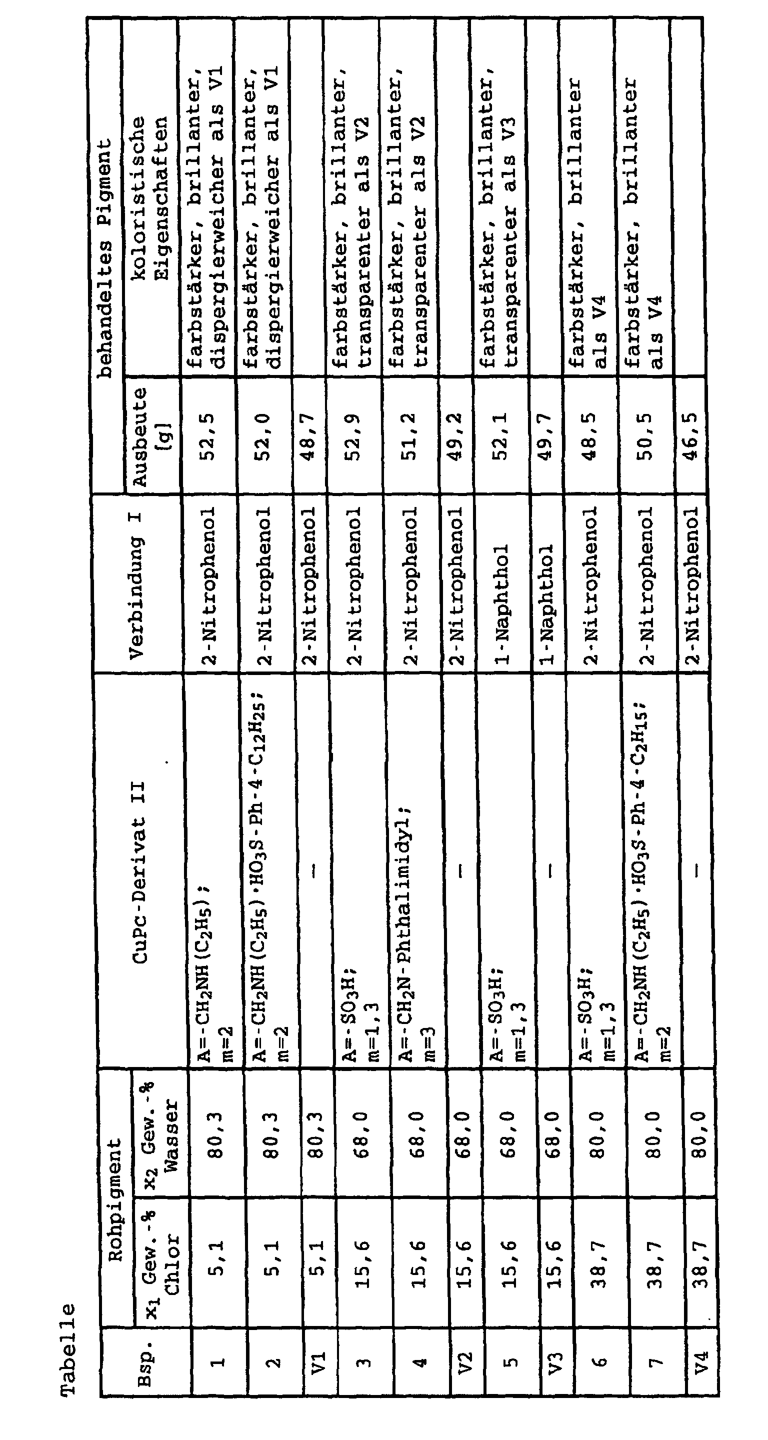

## Patentansprüche

1. Verfahren zur Überführung von halogenierten Kupferphthalocyanin-Rohpigmenten mit einem Chlorgehalt von 4 bis 50,3 Gew.-% in eine für die Anwendung geeignete Pigmentform, dadurch gekennzeichnet, daß man das Rohpigment in der Wärme in Gegenwart eines Kupferphthalocyaninderivats aus der Gruppe der Kupferphthalocyaninsulfonsäuren und -carbonsäuren und deren Alkalimetall-, Ammonium- und Alkylammoniumsalzen, der aminosubstituierten und aminomethylierten Kupferphthalocyanine und deren Umsetzungsprodukten mit Alkylierungsmitteln, Sulfonsäuren, Sulfonsäurechloriden und Carbonsäurechloriden, der imidomethylen- und amidomethylensubstituierten Kupferphthalocyanine, der alkyl-, aryl- und cyanosubstituierten Kupferphthalocyanine und der hydroxy- und alkoxysubstituierten Kupferphthalocyanine, gewünschtenfalls in Anwesenheit von Wasser, mit einer bei Arbeitstemperatur in flüssiger Form vorliegenden, aciden aromatischen organischen Verbindung der allgemeinen Formel I 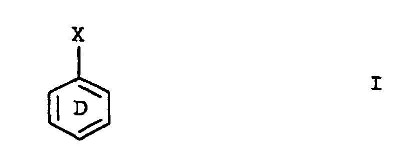 in welcher X Hydroxy oder Carboxy bedeutet und der Benzolring D zusätzlich bis zu zwei gleiche oder verschiedene Substituenten aus der Gruppe Nitro, C₁-C₄-Alkyl, C₂-C₄-Alkenyl, Chlor und Brom tragen kann und benzoanneliert sein kann, behandelt.

2. Verfahren nach Anspruch 1, dadurch gekennzeichnet, daß man als acide aromatische organische Verbindung der Formel I 2-Nitrophenol, 3-Nitrophenol, 4-Nitrophenol, 1-Naphthol oder 2-Naphthol einsetzt.

3. Verfahren nach Anspruch 1 oder 2, dadurch gekennzeichnet, daß man ein Kupferphthalocyaninderivat der allgemeinen Formel II 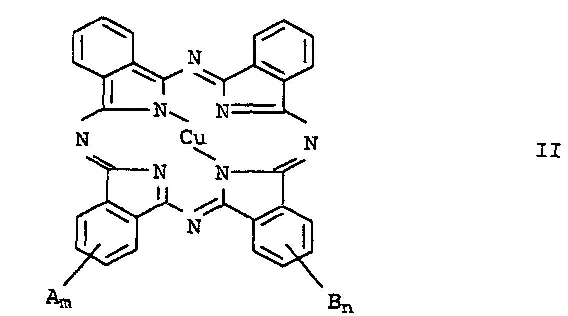 einsetzt, in welcher die Variablen folgende Bedeutung haben:
A und B unabhängig voneinander folgende Substituenten: -SO₃M, -CO₂M, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹, -NHSO₂R¹, -CH₂NHSO₂R¹, -SO₂NHR¹, -CONHR¹, C₁-C₆-Alkyl, Aryl, Cyano oder -OR⁶, wobei
R¹ und R² unabhängig voneinander Wasserstoff oder C₂-C₂₀-Alkenyl oder C₁-C₂₀-Alkyl bedeuten, das durch -NR⁷R⁸ substituiert sein kann, wobei R⁷ und R⁸ unabhängig voneinander für C₁-C₂₀-Alkyl, C₅-C₈-Cycloalkyl, das ein oder mehrere Heteroatome enthalten kann, oder Wasserstoff stehen,
R³ und R⁴ unabhängig voneinander Wasserstoff, C₁-C₂₀-Alkyl, C₂-C₂₀-Alkenyl oder Aryl bedeuten oder unter Ausbildung eines das Stickstoffatom sowie gegebenenfalls weitere Heteroatome oder Carbonyl- oder Sulfonylgruppen enthaltenden, 5-oder 6-gliedrigen Rings, der benzanelliert sein kann, miteinander verbunden sind,
R⁵ für p-(C₁₀-C₂₀-Alkyl)phenyl oder C₂-C₂₀-Alkenyl steht;
R⁶ Wasserstoff oder C₁-C₆-Alkyl bedeutet und
M für Wasserstoff oder ein Alkalimetall steht;
m eine ganze oder gebrochene Zahl > 0 bis 4,0;
n eine ganze oder gebrochene Zahl von 0 bis 4,0.

4. Verfahren nach den Ansprüchen 1 bis 3, dadurch gekennzeichnet, daß man ein Kupferphthalocyaninderivat der Formel II einsetzt, in welcher die Variablen folgende Bedeutung haben:
A und B unabhängig voneinander folgende Substituenten: -SO₃M, -SO₃H·HNR¹R², -CH₂NR³R⁴, -CH₂NR³R⁴·HO₃SR⁵ oder -SO₂NHR¹, wobei
R¹ und R² unabhängig voneinander für C₁-C₂₀-Alkyl oder Wasserstoff stehen,
R³ und R⁴ unabhängig voneinander C₁-C₆-Alkyl oder Wasserstoff bedeuten oder unter Ausbildung eines das Stickstoffatom sowie Carbonyl- oder Sulfonylgruppen enthaltenden benzannelierten, 5-gliedrigen Rings miteinander verbunden sind;
R⁵ für p-(C₁₀-C₂₀-Alkyl)phenyl steht;
m eine ganze oder gebrochene Zahl > 0 bis 4;
n eine ganze oder gebrochene Zahl von 0 bis 4, wobei die Summe m + n einen Wert von 0,1 bis 4 annimmt.

5. Verfahren nach den Ansprüchen 1 bis 4, dadurch gekennzeichnet, daß man 0,1 bis 20 Gew.-% des Kupferphthalocyaninderivats der Formel II, bezogen auf das Rohpigment, einsetzt.

## Claims

1. A process for transforming crude halogenated copper phthalocyanine pigments having a chlorine content of from 4 to 50.3% by weight into a useful pigmentary state, which comprises treating the crude pigment at elevated temperature with an acidic aromatic organic compound that is liquid at the process temperature and has the general formula I 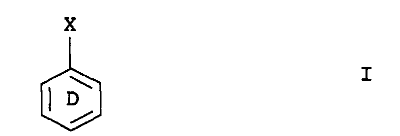 where X is hydroxyl or carboxyl and the benzene ring D may additionally bear up to two identical or different substituents selected from the group consisting of nitro, C₁-C₄-alkyl, C₂-C₄-alkenyl, chlorine and bromine and may be benzofused,
in the presence of a copper phthalocyanine derivative selected from the group consisting of the copper phthalocyanine-sulfonic and -carboxylic acids and their alkali metal, ammonium and alkylammonium salts, the amino-substituted and aminomethylated copper phthalocyanines and their reaction products with alkylating agents, sulfonic acids, sulfonyl chlorides and carbonyl chlorides, the imidomethylene- and amidomethylene-substituted copper phthalocyanines, the alkyl-, aryl- and cyano-substituted copper phthalocyanines and the hydroxyl- and alkoxy-substituted copper phthalocyanines, if desired in the presence of water.

2. A process as claimed in claim 1, wherein the acidic aromatic organic compound of the formula I is 2-nitrophenol, 3-nitrophenol, 4-nitrophenol, 1-naphthol or 2-naphthol.

3. A process as claimed in claim 1 or 2, wherein the copper phthalocyanine derivative used has the general formula II 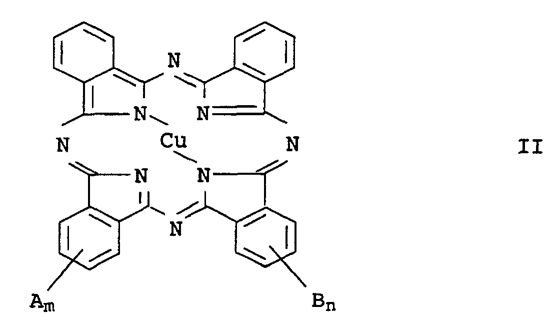 where:
A and B are independently of each other the following substituents:
-SO₃M, -CO₂M, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹, -NHSO₂R¹, -CH₂NHSO₂R¹, -SO₂NHR¹, -CONHR¹, C₁-C₆-alkyl, aryl, cyano or -OR⁶, where
R¹ and R² are each independently of the other hydrogen or C₂-C₂₀-alkenyl or C₁-C₂₀-alkyl which may be substituted by -NR⁷R⁸, where R⁷ and R⁸ are each independently of the other C₁-C₂₀-alkyl, C₅-C₈-cycloalkyl, which may contain one or more hetero atoms, or hydrogen,
R³ and R⁴ are each independently of the other hydrogen, C₁-C₂₀-alkyl, C₂-C₂₀-alkenyl or aryl or combine with the nitrogen atom to form a 5- or 6-membered ring which optionally contains further hetero atoms or carbonyl or sulfonyl groups and may be benzofused,
R⁵ is p-(C₁₀-C₂₀-alkyl)phenyl or C₂-C₂₀-alkenyl,
R⁶ is hydrogen or C₁-C₆-alkyl, and
M is hydrogen or an alkali metal,
m is an integer or fraction > 0 to 4.0,
n is an integer or fraction from 0 to 4.0.

4. A process as claimed in any of claims 1 to 3, wherein the copper phthalocyanine derivative used has the formula II where the variables have the following meanings:
A and B are independently of each other the following substituents:
-SO₃M, -SO₃H·HNR¹R², -CH₂NR³R⁴, -CH₂NR³R⁴·HO₃SR⁵ or -SO₂NHR¹, where
R¹ and R² are each independently of the other C₁-C₂₀-alkyl or hydrogen,
R³ and R⁴ are each independently of the other C₁-C₆-alkyl or hydrogen or combine with the nitrogen atom to form a carbonyl- or sulfonyl-containing benzofused 5-membered ring,
R⁵ is p-(C₁₀-C₂₀-alkyl)phenyl,
m is an integer or fraction > 0 to 4,
n is an integer or fraction from 0 to 4, subject to the proviso that the sum m + n is from 0.1 to 4.

5. A process as claimed in any of claims 1 to 4, wherein from 0.1 to 20% by weight of the copper phthalocyanine derivative of the formula II is used, based on the crude pigment.

## Revendications

1. Procédé pour la transformation de pigments bruts de phtalocyanine cuivrique halogénée ayant une teneur en chlore de 4 à 50,3% en poids, sous forme de pigment appropriée à une application, caractérisé en ce qu'on traite le pigment brut en le chauffant, en présence d'un dérivé de phtalocyanine cuivrique choisi dans le groupe formé par les acides sulfoniques et carboxyliques de phtalocyanine cuivrique et leur sels de métal alcalin, d'ammonium et d'alkylammonium, les phtalocyanines cuivriques à substitution amino et aminométhyle, et leurs produits réactionnels avec les agents d'alkylation, les acides sulfoniques, les chlorures d'acide sulfonique et d'acide carboxylique, les phtalocyanines cuivriques à substitution imidométhylène et amidométhylène, les phtalocyanines cuivriques à substitution alkyle, aryle et cyano, et les phtalocyanines cuivriques à substitution hydroxy et alcoxy, éventuellement en présence d'eau,
avec un composé organique aromatique acide qui se présente sous forme liquide à la température de travail, et de formule générale I 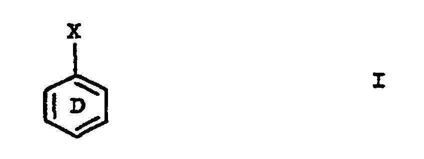 dans laquelle X représente un groupe hydroxyle ou carboxyle, et le cycle benzénique D qui peut être benzocondensé, peut porter en plus un ou deux substituants identiques ou différents choisis dans le groupe formé par un groupe nitro, alkyle en C₁ à C₄, alcényle en C₂ à C₄, un atome de chlore et de brome.

2. Procédé selon la revendication 1, caractérisé en ce que l'on met en oeuvre en tant que composé organique aromatique acide de formule générale I, le 2-nitrophénol, le 3-nitrophénol, le 4-nitrophénol, le 1-naphtol ou le 2-naphtol.

3. Procédé selon la revendication 1 ou 2, caractérisé en ce que l'on met en oeuvre un dérivé de phtalocyanine cuivrique de formule générale II 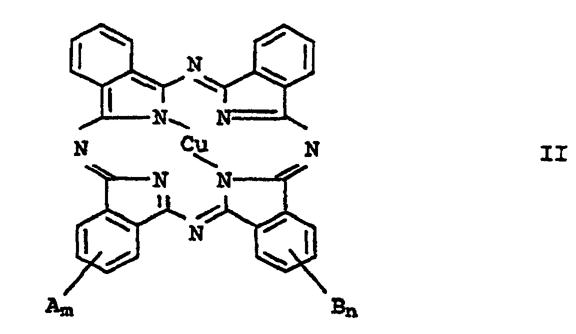 dans laquelle les variables prennent les significations suivantes:
A et B représentent, indépendamment l'un de l'autre, les substituants suivants:
-SO₃M, -CO₂M, -SO₃H·HNR¹R², -CH₂NR³R⁴, -NR³R⁴, -CH₂NR³R⁴·HO₃SR⁵, -NR³R⁴·HO₃SR⁵, -NHCOR¹, -CH₂NHCOR¹,
-NHSO₂R¹, -CH₂NHSO₂R¹, -SO₂NHR¹, -CONHR¹, alkyle en C₁ à C₆, aryle, cyano ou -OR⁶, dans lesquels
R¹ et R² représentent, indépendamment l'un de l'autre, un atome d'hydrogène ou un groupe alcényle en C₂ à C₂₀ ou alkyle en C₁ à C₂₀, qui est éventuellement substitué par -NR⁷R⁸, dans lequel R⁷ et R⁸ représentent, indépendamment l'un de l'autre, un groupe alkyle en C₁ à C₂₀, cycloalcyle en C₅ à C₈ contenant éventuellement un ou plusieurs hétéroatomes, ou bien un atome d'hydrogène,
R³ et R⁴ représentent, indépendamment l'un de l'autre, un atome d'hydrogène, un groupe alcényle en C₂ à C₂₀, alkyle en C₁ à C₂₀ ou aryle, ou sont liés l'un à l'autre en formant un cycle, éventuellement benzocondensé, à 5 ou 6 maillons contenant un atome d'azote ainsi qu'éventuellement des hétéroatomes supplémentaires ou des groupes carbonyle ou sulforyle,
R⁵ représente un groupe p-(alkyle en C₁₀ à C₂₀)phényle ou alcényle en C₂ à C₂₀;
R⁶ représente un atome d'hydrogène ou un groupe alkyle en C₁ à C₆ et
M représente un atome d'hydrogène ou un atome de métal alcalin;
m représente un nombre entier ou fractionnaire valant de plus de 0 à 4,0;
n représente un nombre entier ou fractionnaire valant de 0 à 4,0.

4. Procédé selon les revendications 1 à 3, caractérisé en ce que l'on met en oeuvre un dérivé de phtalocyanine cuivrique de formule générale II dans laquelle les variables prennent les significations suivantes:
A et B représentent indépendamment l'un de l'autre les substituants suivants :
-SO₃M, -SO₃H·HNR¹R², -CH₂NR³R⁴, CH₂NR³R⁴·RO₃SR⁵, ou -SO₂NHR¹, dans lesquels
R¹ et R² représentent, indépendamment l'un de l'autre, un atome d'hydrogène ou un groupe alkyle en C₁ à C₂₀,
R³ et R⁴ représentent indépendamment l'un de l'autre un atome d'hydrogène, un groupe alkyle en C₁ à C₆, ou ils sont liés l'un à l'autre en formant un cycle benzocondensé à 5 maillons contenant un atome d'azote ainsi que des groupes carbonyles ou sulfonyles,
R⁵ représente un groupe p-(alkyle en C₁₀ à C₂₀)phényle;
m représente un nombre entier ou fractionnaire valant de plus de 0 à 4,0;
n représente un nombre entier ou fractionnaire valant de 0 à 4,0, et la somme de m + n vaut de 0,1 à 4.

5. Procédé selon les revendications 1 à 4, caractérisé en ce que l'on met en oeuvre 0,1 à 20 % en poids du dérivé de phtalocyanine cuivrique de formule II, par rapport au pigment brut.
